# EUROPEAN PATENT SPECIFICATION

(11) **EP 0 673 974 B1**
(45) Date of publication and mention of the grant of the patent: **30.06.1999**
(21) Application number: 95200729.2
(22) Date of filing: 23.03.1995
(51) Int. Cl.: C08L 71/12, C08L 77/00, C08K 3/00, C08K 5/00, C08K 7/02

(54) **Extrudable thermoplastic composition consisting of a compatibilized polyphenylene ether polyamide resin blend**
Extrudierbare thermoplastische Zusammensetzung aus einer kompatibilisierten Polyamid/Polyphenylenethermischung
Composition thermoplastique extrudable d'un mélange de polyamide/polyphénylènéther compatibilisé

(30) Priority: 25.03.1994 EP 94104746
(43) Date of publication of application: 27.09.1995
(73) Proprietor: GENERAL ELECTRIC COMPANY, Schenectady, NY 12345 (US)
(72) Inventor: Bailly, Christiaan Maria Emile, NL-4600 AC Bergen op Zoom (NL); Koevoets, Christiaan Henricus Johannes, NL-4600 AC Bergen op Zoom (NL)
(74) Representative: Grever, Frederik

(56) References cited:
- EP-A- 0 234 060
- EP-A- 0 416 436
- EP-A- 0 454 156
- EP-A- 0 501 175
- EP-A- 0 506 386

## Description

The invention relates to thermoplastic compositions consisting of (A) a compatibilized polyphenylene ether-polyamide resin blend and; (B) 0-45% by weight of reinforcing fibers and (C) up to 2% by weight of one or more of the following additives: stabilizers, dyes, pigments, release agents, wherein all quantities have calculated with respect to the sum of A, B, and C, with the exception of compositions comprising an epoxy compound.

The invention also relates to articles formed out of the compositions of the invention.

Commercially available blends of polyphenylene ether and polyamide are less suitable for molding into the desired shapes by extrusion ; they are manufactured by a compounding-extrusion step, followed by pellitization. The obtained pellets are then usually processed by injection molding into the desired shapes.

The present invention deals with compositions which can be formed by extrusion into the desired shape.

It is generally known to increase the molecular weight and hence the viscosity of thermoplastic resins to make them better suitable for molding by extrusion. The use of thermoplastics resins with increased viscosity results in higher melt strength values as necessary for extrusion-molding.

The commercially most interesting blends of polyphenylene ether and polyamide comprise a continuous phase of polyamide in which the polyphenylene ether is dispersed. It would thus be expected that an increase of the viscosity of the polyamide only would make the blend more suitable for molding by extrusion. An increase of the melt viscosity did indeed occur by using a polyamide with increased viscosity in combination with a polyphenylene ether of standard viscosity. Unfortunately this blend with a normal polyphenylene ether showed a very undesirable effect: upon extrusion in the manufacturing step so-called die-swell occurred to such an extent that the product was not uniform in thickness and not well processable.

EP-A-0 373 900 describes a composition comprising a polyphenylene ether, a polyamide, a rubber-like material and an organic compound containing an oxirane oxygen atom. The organic compound is added to improve the moldability by extrusion low molding.

The intrinsic viscosity of the polyphenylene ether may vary between 0,35 to 0,75 dl/g, whereas the relative viscosity of the polyamide should be at least 2,5. An epoxy compound can be used as the oxirane oxygen atom containing compound.

In the comparative example 7 has been shown that the absence of the compound with an oxirane oxygen atom results in breakage of a parison in blow molding applications. This shows that the known composition has insufficient melt strength thus making it unsuitable for extrusion purposes.

It has now been found that the composition of the invention which consists of the components A, B and C and thus does not comprise any further constituents such as a rubber like material described in EP-A-373 900 is, even in the absence of oxirane oxygen atom containing compound, suitable for the shaping of articles by means of extrusion.

It has now been found that by using a combination of a polyphenylene ether with a specific viscosity which is higher than usual and of a polyamide with a viscosity which is higher than usual together with 0-45% by weight of glass fibers and up to 2% weight of additives it is possible to obtain a blend with a satisfactory melt strength without occurrence of the die-swell phenomena.

In the thermoplastic composition of the invention the polyphenylene ether has an intrinsic viscosity of 57 ml/g as measured in toluene at 25 degrees C and a concentration of 0.6 gram per 100 ml and the polyamide is a polyamide-6,6 with a reduced viscosity of at least 190 ml/g as measured in sulphuric acid in accordance with ISO 307.

EP-A-270 796 deals with composition comprising a polyphenylene ether and a non- or low crystalline and crystalline polyamides.

The present invention is restricted to polyamide-6,6.

In the examples of EP-A-270796 a high viscosity polyamide and high viscosity polyphenylene ether has been used in combination with other ingredients like a rubbery polymer. The presence of a rubbery polymer makes the compositions of the examples less suitable for molding by extrusion.

EP-A - 416 436 describes blends of polyamides and functionalized polyphenylene ethers. The relative viscosity of the polyamid varies between 2.5 and 3.4. The polyphenylene ether has a reduced viscosity of 0.2 - 0.9 dl/g, most preferably between 0.45 and 0.6. The known compositions are used for injection molding. In the examples of EP-A 416 436 a polyamid has been used having a relative viscosity of 2.8 and a polyphenylene ether with a reduced viscosity of 0.62.

In general it is desirable that the polyamide component forms the continuous phase in the blend and therefore, typically at least 35 percent by weight of the total PPE-polyamide- composition will be comprised of the polyamide component.

Polyphenylene ethers are a well known class of compounds sometimes referred to as polyphenylene oxides. Examples of suitable polyphenylene ethers and processes for their preparation can be found in US A 3,306,874; 3,306,875; 3,257,357; and 3,257,358. Compositions of the present invention will encompass homopolymers, copolymers and graft copolymers obtained by the oxidative coupling of phenolic compounds. The preferred polyphenylene ethers used as base resins in compositions of the present invention will be comprised of ml/g derived from 2,6-dimethyl phenol. Also contemplated are polyphenylene ether copolymers comprising of ml/g derived from 2,6-dimethyl phenol and 2,3,6-trimethyl phenol.

The polyamide resin used in the composition is of the present invention nylon-6,6.

The polyamides can be obtained by a number of well known processes. Nylon-6,6 is a condensation product of adipic acid and hexamethylenediamine. A nylon-6,6 having reduced viscosity of at least 190 ml/gas measured in sulphuric acid in accordance with ISO 307 is the used type of polyamide.

In blends of the present invention, a compatibilizing agent should be employed in the preparation of the composition. The two-fold purpose for using compatibilizing agents is to improve, in general, the physical properties of the polyphenylene ether-polyamide resin blend, as well as to enable the use of a greater proportion of the polyamide component. When used herein, the expression "compatibilizing agent" refers to those polyfunctional compounds which interact with either the polyphenylene ether, the polyamide, or both. This interaction may be chemical (e.g. grafting) or physical (e.g. affecting the surface characteristics of the dispersed phases). In either instance the resulting polyphenylene ether-polyamide composition appears to exhibit improved compatibility, particularly as evidenced by enhanced impact strength, mold knit line strength andlor elongation. As used herein, the expression "compatibilized polyphenylene ether-polyamide base resin" refers to those compositions which have been physically or chemically compatibilized with an agent as discussed above, as well as those compositions which are physically compatible without such agents, as taught in US-A-3,379,792.

Examples of the various compatibilizing agents that may be employed in the practice of the present invention include: a) liquid diene polymers, b) oxidized polyolefin wax, c) quinones, d) organosilane compounds, e) polyfunctional compounds and functionalized polyphenylene ethers obtained by reacting one or more of the previously mentioned compatibilizing agents with a polyphenylene ether as described hereinafter.

Liquid diene polymers (a) suitable for use herein include homopolymers of a conjugated diene with at least one monomer selected from the group consisting of other conjugated dienes; vinyl monomer, e.g. styrene and alphamethyl styrene; olefins, e.g. ethylene, propylene, butene-1, isobutylene, hexene-1, octene-1 and dodecene-1, and mixtures thereof, having a number average molecular weight of from 150 to 10,000 preferably 150 to 5,000.

These homopolymers and copolymers can be produced by the methods described in, for example, US-A-4,054,612; 3,876,721 and 3,428,699 and include, among others, polybutadiene, polyisoprene, poly(1,3-pentadiene), poly(butadiene-isoprene), poly(styrene-butadiene), polychloroprene, poly(butadiene-alpha methylstyrene), poly(butadiene-styrene-isoprene), poly(butylene-butadiene) and the like.

Oxidized polyolefin waxes (b) are well known and a description thereof and processes for the production of the same are found in US-A-3,822,227 and 3,756,999 and German Patent Publications 3,047,915 and 2,201,862.

Generally, these are prepared by an oxidation or suspension oxidation of polyolefin. An especially preferred polyolefin wax is "Hoechst Wachs".

Quinone compounds (c) suitable for use herein are characterized as having in the molecule of the unsubstituted derivative at least one 6 membered carbon ring; at least two carbonyl groups in the ring structure, both of which may be in the same or, if more than one ring, different rings, provided that they occupy positions corresponding to the 1,2- or 1,4-orientation of the monocyclic quinone; and at least two carbon-carbon double bonds in the ring structure, said carbon-carbon double bounds and carbonyl carbon-carbon double bonds in the ring structure, said carbon-carbon double bonds and carbonyl carbon-oxygen double bonds being conjugated with respect to each other. Where more than one ring is present in the unsubstituted quinone, the rings may be fused, non-fused or both: non-fused rings may be bound by a direct carbon-carbon double bond or by a hydrocarbon radical having conjugated unsaturation such as = C-C=.

Substituted quinones are also within the scope of the present invention. The degree of substitution; where substitution is desired, may be from one to the maximum number of replaceable hydrogen atoms. Examplary of the various substituents that may be present on the unsubstituted quinone structures include halogen, e.g. chlorine, bromine, flourine, etc. hydrocarbon radicals including branched and unbranched, saturated and unsaturated alkyl, aryl, alkyl aryl and cycloalkyl radicals and halogenated derivatives thereof; and similar hydrocarbons having hetero atoms therein, articularly oxygen, sulfur or phosphorous and wherein the same connects the radical to the quinone ring (e.g. oxygen link).

Examplary of the various quinones there may be given 1,2- and 1,4-benzoquinone; 2,6-diphenyl quinone; tetramethyldiquinone; 2,2'- and 4,4'-diphenoquinone; diphenoquinone; 1,2-, 1,4- and 2,6-naphthoquinone; chloranils; 2-chloro- 2,6-dimethyl benzoquinone and the like.

Organosilane compounds (d) suitable as compatibilizing agents are characterized as having in the molecule (a) at least one silicon atom bonded to a carbon through an oxygen link and (b) at least one carbon-carbon double bond or carbon-carbon triple bond and/or a functional group selected from the group consisting of an amine group or a mercapto group provided that the functional group is not directly bonded to the silicon atom.

In such compounds, the C-O-Si component is generally present as an alkoxyl or acetoxy group bonded directly to the silicon atom, wherein the alkoxy or acetoxy group generally has less than 15 carbon atoms and may also contain hetero atoms (e.g. oxygen). Additionally, there may also be more than one silicon atom in the compound, such multiple silicon atoms, if present, being linked through an oxygen link (e.g. siloxanes), a silicon bond; or a bifunctional organic radical (e.g. methylene or phenylene groups).

Examples of suitable organosilane compounds include: gamma amino propyltriethoxy silane, 2-(3-cyclohexanyl)ethyl trimethoxy silane; 1,3-divinyl tetraethoxy silane; vinyl tris-(2-methoxyethoxy)silane; 5-bicycloheptenyl triethoxy silane and gamma mercapto propyl trimethoxy silane.

Polyfunctional compounds (e) which may be employed as compatibilizer in the practice of the present invention are of three types. The first type of polyfunctional compounds are those having in the molecule both (a) a carbon-carbon double bond or a carbon-carbon triple bond and (b) at least one carboxylic acid, acid anhydride, acid halide, anhydride, acid halide anhydride, acid amide, acid ester, imide, amino, or hydroxy group. Examples of such polyfunctional compounds include maleic acid; maleic anhydride; fumaric acid; citraconic acid; itatonic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (e.g. acrylic acid, butenoic acid, methacrylic acid, t-ethylacrylic acid, pentenoic acid); decenoic acids, undecenoic acids, dodecenoic acids, linoleic acid, etc.); esters, acid amides or anhydrides of the foregoing unsaturated carboxylic acids; unsaturated alcohols (e.g. alkyl alcohol, crotyl alcohol, methyl vinyl carbinol, 4-pentene-1-ol, 1,4-hexadiene-3-ol, 3-butene- 1,4-diol, 2,5-dimethyl-3-hexene-2,5-diol and alcohols of the formula CₙH₂ₙ₋₅OH, CₙH₂ₙ₋₇OH and CₙH₂ₙ₋₉OH, wherein n is a positive integer up to 30), unsaturated amines resulting from replacing from replacing the -OH group(s) of the above unsaturated alcohols with NH₂ groups; and functionalized diene polymers and copolymers. Of these, one of the preferred compatibilizing agents for compositions of the present invention is maleic anhydride.

The second group of polyfunctional compatibilizer compounds suitable for use herein are characterized as having both (a) a group represented by the formula (OR) wherein R is hydrogen or an alkyl, aryl, acyl or carbonyl dioxy group and (b) at least two groups each of which may be the same or different selected from carboxylic acid, acid halide, acid anhydride, anhydride, acid halide anhydride, acid ester, acid amide, imido, amino and salts thereof. Typical of this group of compatibilizers are the aliphatic polycarboxylic acids, acid esters and acid amides represented by the formula:

(R^{I}O)ₘR(COOR^{II})ₙ(CONR^{III} _{R}^{IV})ₛ

wherein R is a linear or branched chain, saturated aliphatic hydrocarbon of from 2 to 20, preferably 2 to 10, carbon atoms; R^{I} is selected from the group consisting of hydrogen or an alkyl,aryl, acyl or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group from 1 to 20 carbon atoms, preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n + s) is greater than or equal to 2, preferably equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Illustrative of suitable polycarboxylic acids there may be given citric acid, malic acid, and agaricic acid; including the various commercial forms thereof, such as for example, the anhydrous and hydrated acids. Of these, citric acid is another of the preferred compatibilizing agents. Illustrative of acid esters useful herein include for example, acetyl citrate and mono- and/or distearyl citrates and the like. Suitable acid amides useful herein include for example N,N'- diethyl citric acid amide; N-phenyl citric acid amide; N-dodecyl citric acid amide; N,N'-didodecyl citric acid amide and N-dodecyl malic acid present invention. Especially preferred derivates are the salts thereof, including the salts with amines and/preferably, the alkali and alkaline metal salts. Examplary of suitable salts include calcium malate, calcium citrate, potassium malate and potassium citrate.

The third group of polyfunctional compatibilizer compounds suitable for use herein are characterized as having in the molecule both (a) an acid halide group, most preferably an acid chloride group and (b) at least one carboxylic acid, carboxylic acid anhydride, acid ester or acid amide group, preferably a carboxylic acid or carboxylic acid anhydride group. Exemplary of compatibilizers within this group there may be given trimellitic anhydride acid chloride, chloroformyl succinic anhydride, chloro formyl succinic acid, chloroformyl glutaric anhydride, chloroformyl glutaric acid, chloroacetyl succinic anhydride, chloroacetylsuccinic acid, trimellitic acid chloride and chloroacetyl glutaric acid. Among these, trimellitic anhydride acid chloride is preferred. Furthermore, it is especially preferred that compatibilizers of this group be prereacted with at least a portion of the polyphenylene ether whereby the compatibilizing agent is a PPE-functionalized compound.

Each of the foregoing compatibilizing agents are more fully described in US-A-4,315,086 and 4,642,358; and European Patent Application No. 04640.

The foregoing compatibilizing agents may be used alone or in any combination of one another. Furthermore, they may be added directly to the melt blend or precompounded with either or both the polyphenylene ether and polyamide as well as with other resinous materials employed in the preparation of the compositions of the present invention. With many of the foregoing compatibilizing agents, particularly the polyfunctional compounds, even greater improvement in compatibility is found where at least a portion of the compatibilizing agent is precompounded with all or part of the polyphenylene ether. It is believed that such precompounding may cause the compatibilizing agent to react with the polymer and, consequently, functionalize that polymer as noted above for example, the polyphenylene oxide may be precompounded with trimellitic anhydride acid chloride to form an anhydride functionalized polyphenylene ether which has improved compatibility with the polyamide compared to a non-functionalized ether.

Where the compatibilizing agent is employed in the preparation of the compositions of the present invention, the initial amount used will be dependent upon the specific compatibilizing agent chosen and the specific polymeric system to which is added.

It is possible to use in the composition according to the invention any other known compatibilisation system, with the exception of epoxy compounds. Other systems have been described for example in US-4,866,114.

The thermoplastic composition of the invention may comprise any of the following additives: reinforcing fibers, such as glass fibers.

Glass reinforced grades of compatibilized polyphenylene etherpolyamide resin compositions are extremely important in thermoplastic applications requiring a unique combination of physical properties such as impact strength, rigidity and modulus, dimensional stability, high heat resistance as well as chemical resistance. Principally, glass filled PPE-polyamide compositions of the present invention offer good physical properties. Ten to thirty weight percent loadings of chopped glass fiber can typically be utilized to advantage in these compositions. These weight percents would be based upon the weight of the polyphenylene ether resin, the polyamide resin, and the glass, taken together. More or less glass (e.g. 5 to 45 weight percent) can also be utilized in certain circumstances. Less than about 5 parts glass begins to perform like an unreinforced product. More than about 45 weight percent glass begins to interfere with the ability of the resin to coat and bind the glass effectively.

The composition of the invention may further comprise up to 2% by weight of one or more of the following additives, such as stabilizers, dyes, pigments, release agents.

All patents and patent applications mentioned above are incorporated herein by reference.

The invention will be further illustrated by the following examples.

### Examples

In the examples the following materials have been used:
PPE-1: a poly(2,6-dimethyl-1,4-phenylene ether) with an intrinsic viscosity of 40 ml/g as measured in toluene at 25 degrees C and a concentration of 0.6 gram per 100 ml PPO 803);
PPE-2: a poly(2,6-dimethyl-1,4-phenylene ether) with an intrinsic viscosity of 45 ml/g as measured in toluene at 25 degrees C and a concentration of 0.6 gram per 100 ml PPO 800);
PPE-3: a poly(2,6-dimethyl-1,4-phenylene ether) with an intrinsic viscosity of 57 ml/g as measurred in toluene at 25 degrees C and a concentration of 0.6 gram per 100 ml PPO 805);
PA-1: a polyamide-6,6 with a reduced viscosity of 145 ml/g as measured in sulphuric acid in accordance with ISO 307.(A3Q44)
PA-2: a polyamide-6,6 with a reduced viscosity of 205ml/g as measured in sulphuric acid in accordance with ISO 307.(A4)
PA-3: a polyamide-6,6 with a reduced viscosity of 270ml/g as measured in sulphuric acid in accordance with ISO 307.(A5)
CA: citric acid.
ST: standard iodine based stabilizers
PETS: penta-erythritol tetrastearate
CB: carbon black

The ingredients were compounded in the quantities as indicated in the following table in a twin screw extruder with six different temperature settings over the length of the exruder, varying between 280 and 310 degrees C. The screw speed was 300 rounds per minute, the throughput 10 kilograms per hour. All ingredients with exception of the polyamid were feeded at the throat of the extruder; the polyamid was feeded downstreams about halfway the extruder.

The die of the extruder had a diameter of 4 mm. Some of the blends coming out of the extruder suffered from die-swell, meaning that the strands had a varying diameter far above 4 mm. This is an entirely undesirable effect, since this causes greaet unstability. This makes the blends unsuitable for molding formed products out of them by means of extrusion and unsuitable for pellitizing them in a regular production process.

The strands coming from the extruder were pelletized in a laboratory equipment and dried for 3 hours at 110 degrees C.

The dried pellets were brought into the extruder of a Rheotens melt viscosity instrument of Goettfert-Feinwerk-Technik GmbH. The apparatus comprises an extruder with an extrusion head with a die diameter of 4 mm and two wheels place at a distance of 120 mm below the extrusion head. The strand is conducted between the wheels which turn around with increasing speed. The tensile speed and the tensile force are monitored. Upon occurrence of an unstability they are measured; the melt strenght in Newton is calculated based on the measured values. The results are also given in the table here below.

**TABLE**

| Example | A* | B* | C* | I | II | III | D* |
|---|---|---|---|---|---|---|---|
| Composition (Parts by weight | | | | | | | |
| PPE-1: | 58.9 | 58.9 | - | - | - | - | - |
| PPE-2: | - | - | - | - | - | - | 58.9 |
| PPE-3: | - | - | 58.9 | 58.9 | 58.9 | 53.9 | - |
| | | | | | | | |
| PA-1: | 40 | - | 40 | - | - | - | - |
| PA-2: | - | 40 | - | 40 | - | 45 | 40 |
| PA-3: | - | - | - | - | 40 | - | - |
| | | | | | | | |
| CA : | 0.7 | 0.7 | 0.7 | 0.7 | 0.7 | 0.7 | 0.7 |
| ST : | 0.1 | 0.1 | 0.1 | 0.1 | 0.1 | 0.3 | 0.1 |
| PETS: | 0.3 | 0.3 | 0.3 | 0.3 | 0.3 | 0.3 | 0.3 |
| CB .: | 0.1 | 0.1 | 0.1 | 0.1 | 0.1 | 0.1 | 0.1 |
| | | | | | | | |

| Properties | | | | | | | |
|---|---|---|---|---|---|---|---|
| | | | | | | | |
| Die Swell | no | yes | no | no | no | no | minor |
| Melt Strength | n.d. | 26 | 22 | 26 | 35 | n.d. | n.d |

| | | | | | | | |
|---|---|---|---|---|---|---|---|
| * n.d. means not determined. Examples A, B and D*, C are comparative examples. | | | | | | | |

As can be seen from the results of the table the common blends of polyphenylene ether and a polyamide (Example A) can be readily extruded from the compounding machine. Their melt strength is however unsufficient to shape articles out of this known blend by extrusion.

The blend of Example B with a standard polyphenylene ether and a high viscosity polyamide does show a good melt strength, as could be expected since the polyamide forms the continuous phase. Quite unexpectly the comparative blend showed strong die-swell making it unusable for extrusion purposes.

The above results are quite surprising since the polyamide with high viscosity as used in comparative example B itself i.e. without being blended with a polyphenylene ether is perfectly suitable for extrusion purposes.

Using a polyphenylene ether with higher viscosity in combination with a standard polyamide (blend C) results in a blend without die-swell, but with a rather low melt strength.

Only by combining a high viscosity polyphenylene ether with a high viscosity polyamide (Examples I, II, III) was it possible to obtain a material with a good melt strength, without die swell.

## Claims

1. An extrudable thermoplastic composition consisting of (A) a compatibilized polyphenylene ether-polyamide resin blend, wherein the polyphenylene ether has an intrinsic viscosity of 57 ml/g as measurred in toluene at 25 degrees C and a concentration of 0.6 gram per 100 ml and wherein the polyamide is a polyamide with a reduced viscosity of at least 190 ml/g as measured in sulphuric acid in accordance with ISO 307; (B) 0-45% by weight of reinforcing fibers and (C) up to 2% by weight of one or more of the following additives: stabilizers, dyes, pigments, release agents, wherein all quantities have been calculated with respect to the sum of A, B and C, with the exception of compositions comprising an epoxy compound.

2. A composition as in Claim 1 wherein the compatibilized resin blend consists of 5 to 95 weight percent polyphenylene ether resin and 95 to 5 weight percent polyamide resin, based upon the weight of polyphenylene ether and polyamide together.

3. A composition as in Claim 2 wherein said polyamide resin constitutes a continuous phase in an amount greater than 35 weight percent of the compatibilized resin blend.

4. A composition as in Claim 1 comprising a compatibilizing agent selected from the group consisting of: maleic anhydride, fumaric acid, citric acid, malic acid, and reaction products of a polyphenylene ether and trimellitic anhydride acid chloride.

5. A composition as in Claim 1 wherein said polyphenylene ether resin is a polymer or copolymer comprised of one or more units derived from units selected from the group consisting of 2,6-dimethyl phenol units and 2,3,6-trimethyl phenol units.

6. A composition as in claim 5 wherein said polyphenylene ether is poly(2,6-dimethyl-1,4-phenylene ether).

7. Articles formed out of the composition of claim 1.

## Patentansprüche

1. Eine extrudierbare thermoplastische Zusammensetzung bestehend aus (A) einer kompatibilisierten Polyamid/Polyphenylenethermischung, worin der Polyphenylenether eine Grenzviskositätszahl von 57 ml/g gemessen in Toluol bei 25°C und einer Konzentration von 0,6 g pro 100 ml, hat und worin das Polyamid ein Polyamid mit einer reduzierten Viskosität von wenigstens 190 ml/g ist, gemessen in Schwefelsäure in Übereinstimmung mit ISO 307; (B) 0 bis 45 Gew.-% verstärkender Fasern und (C) bis zu 2 Gew.-% eines oder mehrerer der nachfolgenden Additive: Stabilisatoren, Farbstoffe, Pigmente, Entformungsmittel, wobei alle Mengen mit Bezug auf die Summe von A, B und C berechnet worden sind, mit der Ausnahme von Zusammensetzungen, die eine Epoxyverbindung aufweisen.

2. Zusammensetzung nach Anspruch 1, dadurch gekennzeichnet, daß die kompatibilisierte Mischung aus 5 bis 95 Gew.-% Polyphenylenetherharz und 95 bis 5 Gew.-% Polyamidharz besteht, bezogen auf das Gewicht des Polyphenylenethers und Polyamids zusammen.

3. Zusammensetzung nach Anspruch 2, dadurch gekennzeichnet, daß das Polyamidharz eine kontinuierliche Phase ausbildet in einer Menge von größer als 35 Gew.-% der kompatibilisierten Mischung.

4. Zusammensetzung nach Anspruch 1, aufweisend ein kompatibilisierendes Mittel ausgewählt aus der Gruppe bestehend aus: Maleinsäureanhydrid, Fumarsäure, Zitronensäure, Äpfelsäure und Reaktionsprodukte aus Polyphenylenether und Trimellitanhydridsäurechlorid.

5. Zusammensetzung nach Anspruch 1, dadurch gekennzeichnet, daß das Polyphenylenetherharz ein Polymer oder Coplymer ist, welches sich aus ein oder mehreren Einheiten zusammensetzt, die sich von Einheiten ableiten ausgewählt aus der Gruppe bestehend aus 2,6-Dimethylphenoleinheiten und 2,3,6-Trimethylphenoleinheiten.

6. Zusammensetzung nach Anspruch 5, dadurch gekennzeichnet, daß der Polyphenylenether Poly(2,6-Dimethyl-1,4-Phenylether) ist.

7. Gegenstände gebildet aus der Zusammensetzung nach Anspruch 1.

## Revendications

1. Composition thermoplastique extrudable comprenant (A) un mélange de résines de poly(phénylène éther) et de polyamide, rendues compatibles, dans lequel le poly(phénylène éther) présente une viscosité intrinsèque de 57 ml/g, telle que mesurée dans le toluène à 25 °C, et une concentration de 0,6 g pour 100 ml, et dans lequel le polyamide est un polyamide présentant une viscosité réduite d'au moins 190 ml/g, telle que mesurée dans l'acide sulfurique selon la norme ISO 307 ; (B) de 0 à 45 % en poids de fibres de renforcement et (C) jusqu'à 2 % en poids d'un ou de plusieurs des additifs suivants : stabilisants, colorants, pigments, agents de démoulage, dans laquelle toutes les quantités ont été calculées par rapport à la somme de A, B et C, à l'exception des compositions comprenant un composé époxyde.

2. Composition selon la revendication 1, dans laquelle le mélange de résines rendues compatibles comprend de 5 à 95 % en poids de résine poly(phénylène éther), et de 95 à 5 % en poids de résine polyamide, par rapport au poids de l'ensemble constitué par le poly(phénylène éther) et le polyamide.

3. Composition selon la revendication 2, dans laquelle ladite résine polyamide constitue une phase continue en une quantité supérieure à 35 % en poids du mélange de résines rendues compatibles.

4. Composition selon la revendication 1, comprenant un agent de compatibilité choisi dans l'ensemble constitué par l'anhydride maléique, l'acide fumarique, l'acide citrique, l'acide malique, et des produits réactionnels d'un poly(phénylène éther) et d'un chlorure d'acide de l'anhydride triméllitique.

5. Composition selon la revendication 1, dans laquelle ladite résine poly(phénylène éther) est un polymère ou copolymère comprenant un ou plusieurs motifs dérivés des motifs choisis dans l'ensemble constitué des motifs 2,6-diméthylphénol et 2,3,6-triméthylphénol.

6. Composition selon la revendication 5, dans laquelle ledit poly(phénylène éther) est un poly(2,6-diméthyl-1,4-phénylène éther).

7. Articles formés à partir de la composition selon la revendication 1.
